# EUROPEAN PATENT APPLICATION

(11) **EP 4 682 051 A1**
(43) Date of publication of application: **21.01.2026**
(21) Application number: 25190005.6
(22) Date of filing: 16.07.2025
(51) Int. Cl.: B64D 9/00, B65G 13/02, B64F 1/32

(54) **SCALABLE SWARM POWER DRIVE SYSTEM**

(30) Priority: 17.07.2024 US 202418775337
(71) Applicant: Goodrich Corporation, Charlotte, NC 28217-4578 (US)
(72) Inventor: SETTERSTROM, Kevin, Fargo, ND (US)
(74) Representative: Dehns

(57) **Abstract**

A cargo handling system. The cargo handling system includes a plurality of power drive units (110, 210). Each power drive unit in the plurality of power drive units includes a drive roller (208), a motor (242) configured to rotate the drive roller, and a controller (130). The controller is configured to directly communicate with at least one other power drive unit of the plurality of power drive units to drive cargo in a predetermined direction.

## Description

### FIELD

The present disclosure generally relates to the field of cargo handling systems and, more particularly, to a scalable swarm power drive system.

### BACKGROUND

Typical cargo handling systems, particularly in air cargo, utilize complex centralized control systems for loading and unloading of cargo. Such cargo handling systems use multiple control panels communicating with a master control panel (MCP) which makes decisions for every power drive unit (PDU). Such cargo handling system may result in linear time complexity since, as a size of the cargo handling system increases, the MCP must make more decisions, which may cause bottlenecks and potential software development challenges. Additionally, such cargo handling system may result complex decision-making and software requirements since the reliance on a central MCP necessitates sophisticated software to handle various scenarios and cargo configurations, potentially leading to unique software for specific cargo systems.

### SUMMARY

A cargo handling system is disclosed. The cargo handling system includes a plurality of power drive units. Each power drive unit in the plurality of power drive units includes a drive roller, a motor configured to rotate the drive roller, and a controller. The controller is configured to directly communicate with at least one other power drive unit of the plurality of power drive units to drive cargo in a predetermined direction.

In various embodiments, in order to drive the cargo in the predetermined direction, the controller is configured to send a command to engage the drive roller of at least one of the power drive unit or the at least one other power drive unit.

In various embodiments, the at least one other power drive unit is a power drive unit adjacent to the power drive unit.

In various embodiments, by each power drive unit of the plurality of power drive units communicating with the at least one other power drive unit of the plurality of power drive units, a mesh network of communication is formed by of the plurality of power drive units.

In various embodiments, the predetermined direction is provided from an operator via an operator controller.

In various embodiments, each of the plurality of power drive units further includes a presence sensor. In various embodiments, the controller is further configured to send a command to engage the drive roller of in response to receiving a signal from the presence sensor indicating a presence of the cargo.

In various embodiments, a size of the cargo may be determined by the plurality of power drive units based on at least two power drive units of the plurality of power drive units providing signals from respective presence sensors indicating a presence of the cargo.

In various embodiments, responsive to at least one power drive unit of the plurality of power drive units experiencing an event such that the at least one power drive unit becomes non-operational and responsive to the at least one power drive unit recovering from the event, the controller is configured to: establish communication with at the least one other power drive unit of the plurality of power drive units, request configuration information from the at least one other power drive unit, and, responsive to receiving the configuration information, rejoin the plurality of power drive units as part of a mesh network.

Also disclosed herein is an aircraft. The aircraft includes cargo handling system. The cargo handling system includes a plurality of power drive units. Each power drive unit in the plurality of power drive units includes a drive roller, a motor configured to rotate the drive roller, and a controller. The controller is configured to directly communicate with at least one other power drive unit of the plurality of power drive units to drive cargo in a predetermined direction.

In various embodiments, in order to drive the cargo in the predetermined direction, the controller is configured to send a command to engage the drive roller of at least one of the power drive unit or the at least one other power drive unit.

In various embodiments, the at least one other power drive unit is a power drive unit adjacent to the power drive unit.

In various embodiments, by each power drive unit of the plurality of power drive units communicating with the at least one other power drive unit of the plurality of power drive units, a mesh network of communication is formed by of the plurality of power drive units.

In various embodiments, the predetermined direction is provided from an operator via an operator controller.

In various embodiments, each of the plurality of power drive units further includes a presence sensor. In various embodiments, the controller is further configured to send a command to engage the drive roller of in response to receiving a signal from the presence sensor indicating a presence of the cargo.

In various embodiments, a size of the cargo may be determined by the plurality of power drive units based on at least two power drive units of the plurality of power drive units providing signals from respective presence sensors indicating a presence of the cargo.

In various embodiments, responsive to at least one power drive unit of the plurality of power drive units experiencing an event such that the at least one power drive unit becomes non-operational and responsive to the at least one power drive unit recovering from the event, the controller is configured to: establish communication with at the least one other power drive unit of the plurality of power drive units, request configuration information from the at least one other power drive unit, and, responsive to receiving the configuration information, rejoin the plurality of power drive units as part of a mesh network.

Also disclosed herein is a method for a plurality of power drive units to drive cargo. The method includes establishing, by a controller in a first power drive unit of the plurality of power drive units, communications with at least one other controller in at least one other power drive unit in the plurality of power drive units, and, responsive to receiving a first command to drive the cargo in a first direction, communicating, by the controller in the first power drive unit, with the at least one other controller in the at least one other power drive unit in order that both the first power drive unit and the at least one other power drive unit drive the cargo in the first direction.

In various embodiments, in order to drive the cargo in the first direction, the controller is configured to send a second command to engage a drive roller of the first power drive unit.

In various embodiments, the controller is configured to send the second command to engage the drive roller of the first power drive unit in response to receiving a signal from a presence sensor indicating a presence of the cargo.

In various embodiments, the at least one other power drive unit is a power drive unit adjacent to the power drive unit.

The present disclosure may include any one or more of the individual features disclosed above and/or below alone or in any combination thereof. The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with ULDs, in accordance with various embodiments.
FIG. 1B illustrates a portion of a cargo handling system, in accordance with various embodiments.
FIG. 2 illustrates a portion of a cargo handling system, in accordance with various embodiments.
FIG. 3 illustrates a schematic view of a cargo handling system positioned on a cargo deck of an aircraft is illustrated, in accordance with various embodiments.
FIG. 4 illustrates a schematic view of a swarm PDU communicating with select PDUs in its immediate vicinity in a cargo handling system positioned on a cargo deck of an aircraft, in accordance with various embodiments.
FIG. 5 illustrates a schematic view of an operator input device configured to provide input to PDUs configured to communicate via a mesh network in a cargo handling system positioned on a cargo deck of an aircraft, in accordance with various embodiments.
FIGS. 6A and 6B illustrate a schematic view of PDUs communicating with other PDUs in their immediate vicinity in a cargo handling system positioned on a cargo deck of an aircraft, in accordance with various embodiments.
FIGS. 7A, 7B, 7C, 7D, and 7E illustrate a schematic view of a ULD being loaded into the cargo handling system positioned on a cargo deck of an aircraft using a set of swarm PDUs, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a,'' "an" or "the" may include one or more than one and that reference to an item in the singular may also include the item in the plural. Further, all ranges may include upper and lower values and all ranges and ratio limits disclosed herein may be combined.

As stated previously, cargo handling systems, particularly in air cargo, utilize complex centralized control systems for loading and unloading of cargo. Such cargo handling systems use multiple control panels communicating with a master control panel (MCP) which makes decisions for every power drive unit (PDU). Such cargo handling system may result in linear time complexity since, as a size of the cargo handling system increases, the MCP must make more decisions, which may cause bottlenecks and potential software development challenges. Additionally, such cargo handling system may result complex decision-making and software requirements since the reliance on a central MCP necessitates sophisticated software to handle various scenarios and cargo configurations, potentially leading to unique software for specific cargo systems.

Disclosed herein are systems and methods for a scalable swarm power drive system. In various embodiments, the scalable swarm power drive system decentralizes control. In that regard, rather than the cargo handling system utilizing a traditional centralized control model where a master control panel (MCP) dictates every PDU action, in various embodiments, each individual PDUs is configured to make independent decisions based on their location, sensed information, and communication with adjacent, or substantially adjacent, PDUs. In various embodiments, the PDUs utilize "swarm" and/or mesh data networking where the PDUs, primarily those in close proximity, communicate with each other, thereby forming a "mesh" network for data exchange. In various embodiments, the "mesh" communication approach maintains a constant or near constant level of communication for each PDU, unlike the linear complexity in conventional systems where the MCP's workload increases with system size. In that regard, in various embodiments, each PDU is configured with its unique position within the cargo handling system. In various embodiments, the unique position may be achieved via hardware strapping, RFID tags, or other proprietary technologies, enabling the PDUs to contribute effectively to the overall system operation. In various embodiments, each PDU is configured to identify a presence and estimate the size of a unit load device (ULD) moving through the cargo handling system. In that regard, in various embodiments, as each PDU becomes covered or uncovered by the ULD, the PDUs may collectively map a location and approximate dimensions of the ULD. In various embodiments, the distributed nature of the swarm provides inherent redundancy. In that regard, in various embodiments, responsive to one PDU going offline, i.e. due to a power or electronic failure, the other PDUS may continue operating. In various embodiments, responsive to the PDU recovering, the PDU may rejoin the swarm and regain necessary information through communication with PDUs, primarily those in close proximity. In various embodiments, the decentralized control architecture further provides for simplification of operator control panels. In that regard, since the PDUs handle most decision-making, the operator control panel only need to relay high-level commands and statuses, reducing complexity and enabling the use of similar interfaces across different aircraft platforms.

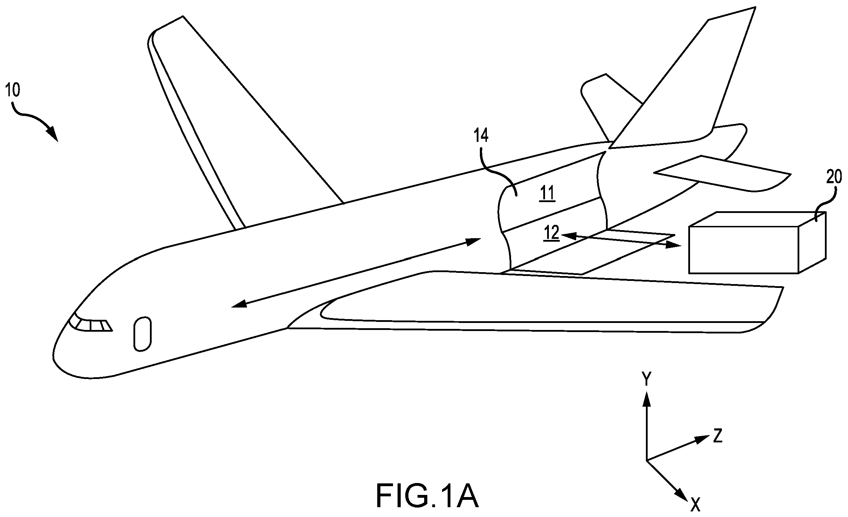

With reference to FIG. 1A, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

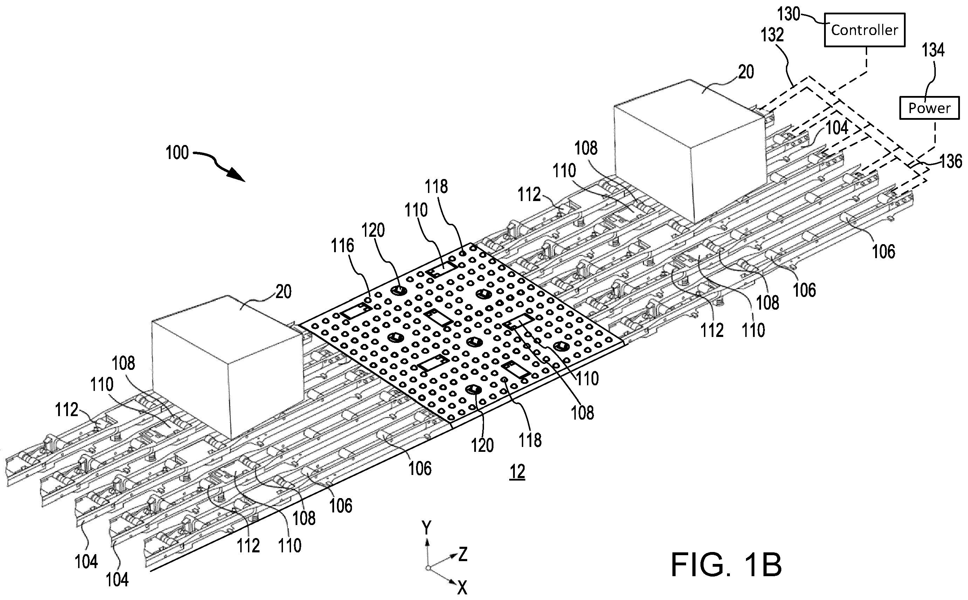

Referring now to FIG. 1B, a portion of cargo deck 12 is illustrated with XYZ axes for ease of illustration, in accordance with various embodiments. Cargo deck 12 includes cargo handling system 100. Cargo handling system may include one or more ball panels 116 and one or more roller trays 104. Ball panels 116 may include a plurality of freely rotating conveyance balls 118. Roller trays 104 include a plurality of freely rotating conveyance rollers 106. Roller trays 104 may be positioned longitudinally along cargo deck 12. In various embodiments, a number of PDUs 110 may be mounted along cargo deck 12. For example, PDUs 110 may be located in ball panels 116 and/or in roller trays 104. PDUs 110 are configured to propel cargo over conveyance balls 118 and conveyance rollers 106 and across cargo deck 12.

PDUs 110 include one or more drive rollers 108, which may be actively controlled by a motor. PDUs 110, including drive rollers 108, provide a mechanism upon which the ULD 20 is propelled over the conveyance rollers 106. The ULD 20 may contact the drive rollers 108 of PDUs 110 located within the roller trays 104 to provide motive force for the ULD 20. Each of PDUs 110 may include an actuator, such as an electrically operated motor, which drives one or more drive rollers 108. In various embodiments, a drive roller 108 may be raised by a PDU of PDUs 110 from a lowered position beneath the conveyance surface 102 to an elevated position above conveyance surface 102. As used with respect to cargo handling system 100, the term "beneath" may refer to the negative y-direction, and the term "above" may refer to the positive y-direction with respect to the provided XYZ axes. In the elevated position, a drive roller 108 contacts and drives the overlying the ULD 20 that rides on the conveyance rollers 106. In accordance with various embodiments, the drive roller 108 may be held or biased in a position above the conveyance surface by a spring.

In various embodiments, a number of brake rollers 112 may be located along cargo deck 18. For example, brake rollers 112 may be mounted in roller trays 104. In various embodiments, one or more brake caster(s) 120 may be coupled to ball panels 116. Stated differently, ball panels 116 may include brake caster(s) 120. Brake caster 120 may be configured to swivel (or rotate) relative to ball panels 116, thereby by allowing brake caster 120 to align with the direction of movement of the ULD 20 over ball panels 116. In various embodiments, brake rollers 112 and brake casters 120 are configured to rotate freely in a first circumferential direction and restrict rotation in the opposite circumferential direction. In this regard, brake rollers 112 and brake casters 120 may slow or prevent translation of cargo across cargo deck 12 in certain directions.

Cargo handling system 100 may include a system controller 130 in communication with the PDUs 110 via a plurality of channels 132. Channels 132 may be a data bus, such as a controller area network (CAN) bus and may include one or more CAN busses or multi-CANs. In various embodiments, an operator may provide instructions to PDUs 110 via the system controller 130. In that regard, in various embodiments, cargo handling system 100 may receive operator input through system controller 130 to instruct PDUs 110 to manipulate the ULD 20 into a desired position on cargo deck 12. However, in various embodiments, each of the PDUs 110 may not activate until communication is established by an adjacent, or substantially adjacent, one of PDUs 110, as described hereafter. In that regard, system controller 130 and PDUs 110 may each include a general-purpose processor, a digital signal processor (DSP), an application specific integrated circuit (ASIC), a field programmable gate array (FPGA) or other programmable logic device, discrete gate or transistor logic, discrete hardware components, or any combination thereof.

System program instructions and/or controller instructions may be loaded onto a tangible, non-transitory, computer-readable medium (also referred to herein as a tangible, non-transitory, memory) having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals *per* se. Additionally, in various embodiments, the cargo handling system 100 may also include a power source 134 configured to supply power to the PDUs 110, brake rollers 112, and/or other components of cargo handling system 100 via one or more power busses 136.

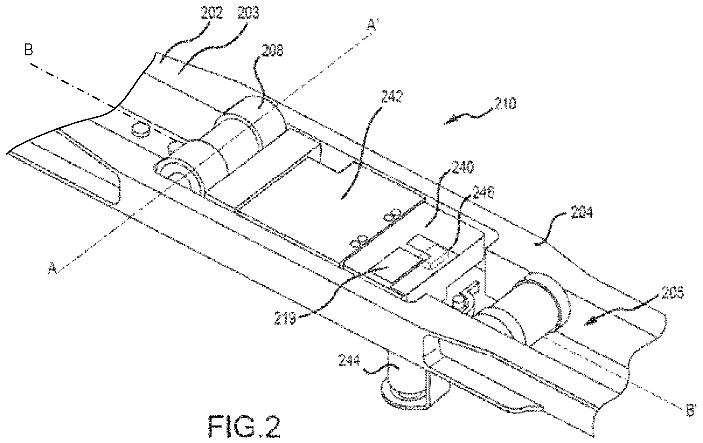

Referring now to FIG. 2, a PDU 210, such as for example, one of the plurality of PDUs 110 described above with reference to FIG. 1B, is illustrated disposed in a tray 204, in accordance with various embodiments. The PDU 210 may rotate the drive roller 208 in one of two possible directions (e.g., clockwise or counterclockwise) to propel the ULD in a direction parallel to the longitudinal axis B-B' of the tray 204. The PDU 210 may comprise a unit controller 240, a unit motor 242 and a drive roller 208 mounted within an interior section 205 of the tray 204. The drive roller 208 may comprise a cylindrical wheel coupled to a drive shaft and configured to rotate about an axis A-A'. The drive roller 208 may be in mechanical communication with the unit motor 242, which may be, for example, an electromagnetic, electromechanical or electrohydraulic actuator or other servomechanism. The PDU 210 may further include gear assemblies and other related components for turning or raising the drive roller 208 so that the drive roller 208 may extend, at least partially, above a conveyance surface 202 which, in various embodiments, may be defined as the uppermost surface 203 of the tray 204. At least partial extension of the drive roller 208 above the conveyance surface 202 facilitates contact between the drive roller 208 and a lower surface of a ULD, such as, for example, the ULD 20 described above with reference to FIG. 1B. In various embodiments, the unit controller 240 is configured to control operation of the drive roller 208. The unit controller 240 may include a processor and a tangible, non-transitory memory. The processor may comprise one or more logic modules that implement logic to control rotation and elevation of the drive roller 208. In various embodiments, the PDU 210 may comprise other electrical devices to implement drive logic. In various embodiments, a connector 244 is used to couple the electronics of the PDU 210 to a power source and a system controller, such as, for example, the system controller 130 described above with reference to FIG. 1B. The connector 244 may have pins or slots and may be configured to couple to a wiring harness having pin programing. The unit controller 240 may be configured to receive commands from the system controller through the connector 244 in order to control operation of the unit motor 242.

In various embodiments, the PDU 210 may also include a communication device 246 that is configured to provide wired or wireless communication in order to transmit or receive information or data - e.g., operational status or location data. In various embodiments, the wireless communication may be via near filed communications (NFC), Bluetooth, or Wi-Fi, among others. In various embodiments, the information or data may include information from other PDUs, as described hereafter, in order that the PDU 210 operates as part of a "swarm" that is implemented by the unit controller 240. In various embodiments, the term "swarm" refers to collective behavioral characteristics of a group of decentralized, autonomous devices, such as the PDUs described herein. Additionally, a ULD sensor 219 may be disposed within the tray 204 and configured to detect the presence of a ULD as the ULD is positioned over or proximate to the PDU 210 or the restraint device 214. In various embodiments, as described hereafter, the unit controller 240 may utilize the presence data to operate as part of the "swarm." In that regard, in various embodiments, the ULD sensor 219 may include any type of sensor capable of detecting the presence of a ULD. For example, in various embodiments, the ULD sensor 219 may comprise a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like.

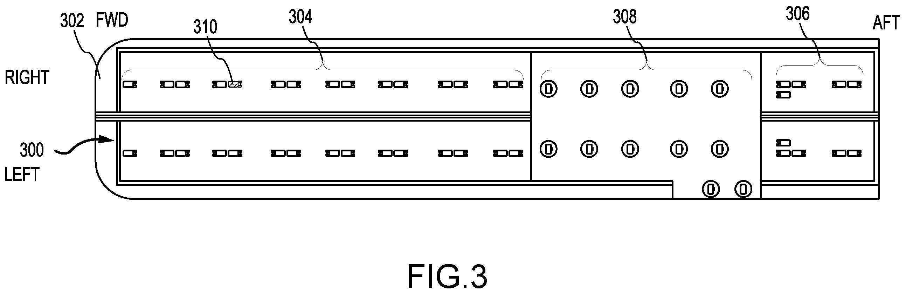

Referring now to FIG. 3, a schematic view of a cargo handling system 300 positioned on a cargo deck 302 of an aircraft is illustrated, in accordance with various embodiments. In various embodiments, the cargo handling system 300 may include a plurality of forward PDUs 304, a plurality of aft PDUs 306, a plurality of loading/unloading area PDUs 308. In various embodiments, the plurality of forward PDUs 304 and the plurality of aft PDUs 306, which are located on both a right side and a left side of the aircraft, are bidirectional PDUs, such that the plurality of forward PDUs 304 and the plurality of aft PDUs 306 are configured to drive ULDs in forward and aft directions. In various embodiments, the plurality of loading/unloading area PDUs 308 are omnidirectional PDUs, such that the plurality of loading/unloading area PDUs 308 are configured to drive ULDs in forward, aft, left, or right directions.

In various embodiments, each of the plurality of forward PDUs 304, the plurality of aft PDUs 306, and the plurality of loading/unloading area PDUs 308 are configured to work as a swarm such that each of the plurality of forward PDUs 304, the plurality of aft PDUs 306, and the plurality of loading/unloading area PDUs 308 are configured to require minimal input from the operator to successfully load and unload cargo and thus, may scale to many types of cargo configurations. In that regard, each swarm PDU, such as PDU 310, is aware of its location within the cargo handling system 300 and is able to communicate with one or more other PDUs of the plurality of forward PDUs 304, the plurality of aft PDUs 306, and the plurality of loading/unloading area PDUs 308 to determine when and how to move a ULD into its designated end location on the cargo deck 302 during loading or off of the cargo deck 302 from its location during unloading. Accordingly, in various embodiments, each of the plurality of forward PDUs 304, the plurality of aft PDUs 306, and the plurality of loading/unloading area PDUs 308 translate high level information to other one(s) of the plurality of forward PDUs 304, the plurality of aft PDUs 306, and the plurality of loading/unloading area PDUs 308 such as one or more of ULD locations, objectives/goals provided by the operator, or error statuses, among others.

In various embodiments, when communicating, each of the plurality of forward PDUs 304, the plurality of aft PDUs 306, and the plurality of loading/unloading area PDUs 308 take advantage of their proximity, mainly interacting with other ones of the plurality of forward PDUs 304, the plurality of aft PDUs 306, and the plurality of loading/unloading area PDUs 308 in their immediate vicinity. This "swarm" type of communication approach maintains a constant complexity in their design, diverging from the linear complexity of traditional control applications. In various embodiments, this type of communication method facilitates a mesh concept, independent of specific communication bus architectures present in current cargo systems. In various embodiments, the term "mesh" refers to a system where one node directly, dynamically, and non-hierarchically interacts with other nodes, such as one PDU directly, dynamically, and non-hierarchically interacting with other PDUs. In various embodiments, this type of communication method further aligns with scalability, as each swarm PDU may be strategically positioned throughout the cargo handling system 300, with the same swarm PDU adaptable to any compatible platforms. In that regard, in various embodiments, once installed and powered on, each swarm PDU establishes communication to fulfill cargo loading/unloading objectives.

In various embodiments, the "mesh" happens with the data, which may be agnostic to the physical networking of the power drive system. In various embodiments, all the plurality of forward PDUs 304, the plurality of aft PDUs 306, and the plurality of loading/unloading area PDUs 308 may be on a same local bus and therefore, have direct path communication too all other ones of the plurality of forward PDUs 304, the plurality of aft PDUs 306, and the plurality of loading/unloading area PDUs 308 on their bus. However, in various embodiments, the "swarm" configuration eliminates the need to process all information from all other PDUs, but rather only the PDUs that directly impact the functionality of each individual PDU subjectively. In that regard, in various embodiments, depending on the system configuration, which is discussed hereafter, each PDU of the plurality of forward PDUs 304, the plurality of aft PDUs 306, and the plurality of loading/unloading area PDUs 308 may determine which other PDU(s) of the plurality of forward PDUs 304, the plurality of aft PDUs 306, and the plurality of loading/unloading area PDUs 308 to communicate with.

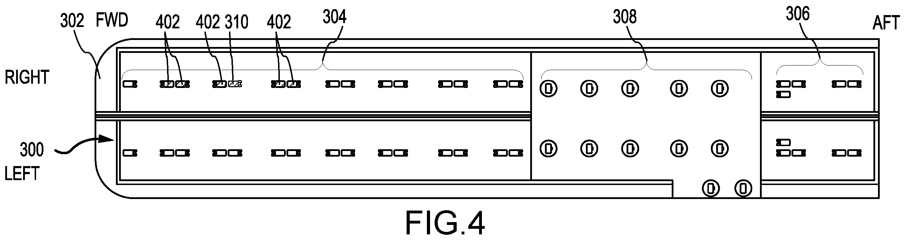

Referring now to FIG. 4, a schematic view of a swarm PDU communicating with select PDUs in its immediate vicinity in a cargo handling system 300 positioned on a cargo deck 302 of an aircraft is illustrated, in accordance with various embodiments. As discussed previously, each PDU of the plurality of forward PDUs 304, the plurality of aft PDUs 306, and the plurality of loading/unloading area PDUs 308 may determine which other PDU(s) of the plurality of forward PDUs 304, the plurality of aft PDUs 306, and the plurality of loading/unloading area PDUs 308 to communicate with. As is illustrated in FIG. 4, PDU 310 may select PDUs 402 to communicate with because the PDUs 402 are in the immediate vicinity of PDU 310. In various embodiments, the immediate vicinity may include PDUs that are adjacent, or substantially adjacent, i.e. within a predetermined distance, of the PDU 310. In various embodiments, the immediate vicinity may include PDUs that are adjacent, or substantially adjacent, i.e. within a predetermined distance, of the PDU 310 and are on specific side of the aircraft. However, in the various embodiments, PDUs are not limited to only communication with other PDUS on a particular side or within a particular section, i.e. the plurality of forward PDUs 304, the plurality of aft PDUs 306, and the plurality of loading/unloading area PDUs 308. That is, in various embodiments, a PDU in the plurality of forward PDUs 304 may "mesh" with a PDU in the plurality of loading/unloading area PDUs 308. As another example, in various embodiments, a PDU on a right side of the plurality of loading/unloading area PDUs 308 may communicate with a PDU on the left side of the plurality of loading/unloading area PDUs 308.

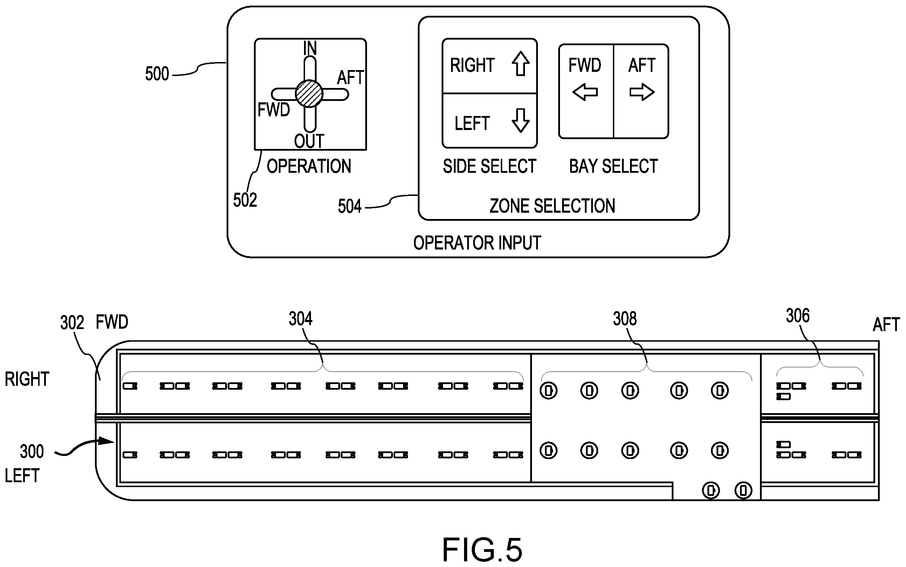

Referring now to FIG. 5, a schematic view of an operator input device configured to provide input to PDUs configured to communicate via a mesh network in a cargo handling system 300 positioned on a cargo deck 302 of an aircraft is illustrated, in accordance with various embodiments. In various embodiments, an operator may utilize an operator controller 500 to provide input to each of the plurality of forward PDUs 304, the plurality of aft PDUs 306, and the plurality of loading/unloading area PDUs 308 in order that, responsive to one or more of the plurality of forward PDUs 304, the plurality of aft PDUs 306, and the plurality of loading/unloading area PDUs 308 detecting a ULD, the one or more of the plurality of forward PDUs 304, the plurality of aft PDUs 306, and the plurality of loading/unloading area PDUs 308 know which direction, i.e. forward, aft, right, or left, to move the ULD. In that regard, in various embodiments, the operator controller 500 provides an operation commands 502 and a zone selection 504. In various embodiments, the operator utilizes the operation commands 502 to identify a direction that the ULD is to be moved, i.e. forward, aft, in, or out, and whether the ULD is to be loaded laterally or rotated. In various embodiments, the operator controller 500 provide the zone selection 504 to identify that the ULD is to be positioned either on a right side of the aircraft or a left side of the aircraft and is to be positioned either in a forward bay portion of the aircraft or in an aft bay portion of the aircraft relative to the loading area.

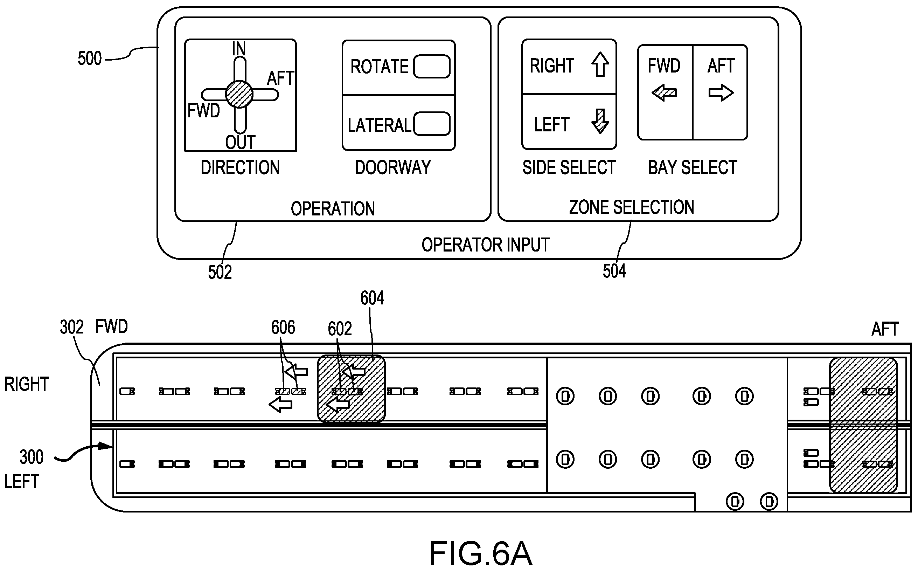

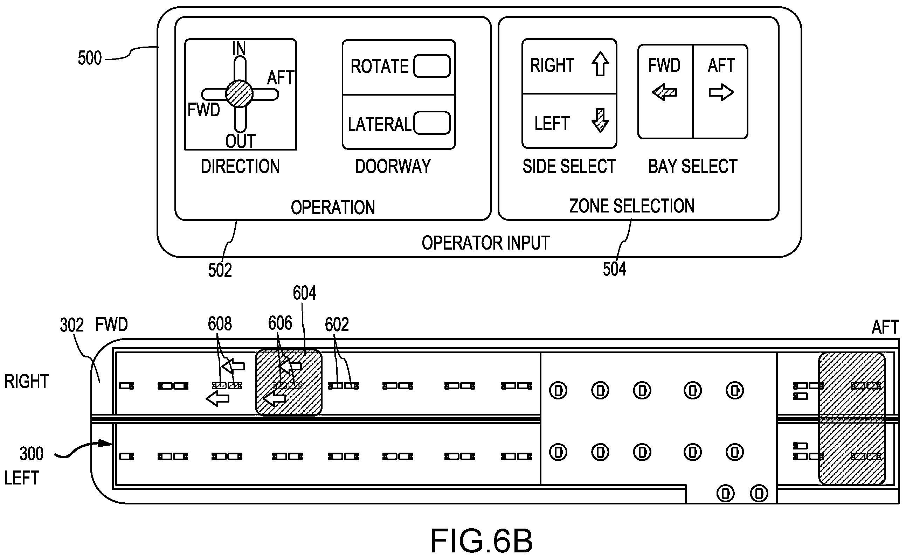

Referring now to FIGS. 6A and 6B, a schematic view of PDUs communicating with other PDUs in their immediate vicinity in a cargo handling system 300 positioned on a cargo deck 302 of an aircraft is illustrated, in accordance with various embodiments. In various embodiments, the operator utilizes the operation commands 502 of the operator controller 500 to identify a direction that the ULD is to be moved, i.e. forward, to identify that the ULD is to be positioned on a right side of the aircraft, and to identify that the ULD is to be positioned in the forward bay portion relative to the loading area. Responsive to these commands and with regard to FIG. 6A, in various embodiments, swarm PDUs 602, which are currently moving a ULD 604 to a forward end of the aircraft, communicate with PDUs 606 that the ULD 604 is headed in the forward direction in order that PDUs 606 may monitor for a presence of the ULD 604 and, responsive to detecting the ULD 604 above them, may operate to drive the ULD 604 in the forward direction. Responsive to these commands and with regard to FIG. 6B, in various embodiments, PDUs 606, which are currently moving the ULD 604 to a forward end of the aircraft, communicate with PDUs 608 that the ULD 604 is headed in the forward direction in order that PDUs 608 may monitor for a presence of the ULD 604 and, responsive to detecting the ULD 604 above them, may operate to drive the ULD 604 in the forward direction. It should be noted that, in various embodiments, PDUs 606 may also communicate with the swarm PDUs 602 that they are currently driving the ULD 604 and the swarm PDUs 602 may enter a standby mode.

In various embodiments, each swarm PDU in the cargo handling system 300 may be preconfigured for the cargo handling system 300, aware of a position where it will be located in the cargo handling system 300 prior to installation in the cargo deck 302 or may communicate with other swarm PDUs or a master control panel (MCP), among others, of the aircraft once installed in the cargo handling system 300 in the cargo deck 302 to identify its position. In that regard, in various embodiments, each swarm PDU may be pre-configured with aircraft configuration information or may, upon system startup, receive broadcast network configuration information from another swarm PDU or a master control panel (MCP), among others. In various embodiments, receive broadcast network configuration information from another swarm PDU or a master control panel (MCP), among others, may be in response to a request from the swarm PDU upon system startup to receive the configuration information. In various embodiments, the configuration information is data intended to have all the unique properties of the specific aircraft cargo system implementation, i.e. locations of all swarm PDUs, locations of control panels, available aircraft ULD sizes, power bus PDU allocations, communication bus PDU allocations, or aircraft identifiers, among others.

In various embodiments, each swarm PDU must be aware of its unique position within the cargo handling system 300. In that regard, in various embodiments, the unique position may be obtained by the swarm PDU by hardware strapping, i.e. harness pin programming provided through a cable connection to power and the MCP or radio frequency identification (RFID) wireless near field communication (NFC), Bluetooth, or Wi-Fi, among others, to the MCP, among others. In various embodiments, depending on the varying information provided, each swarm PDU is configured to extrapolate its location within the cargo handling system 300 of the aircraft and its position with regard to other swarm PDUs in order to identify other swarm PDUs in their immediate vicinity.

In that regard, in various embodiments, since the purpose of a swarm PDU control system is to establish a decentralized control architecture where each swarm PDU independently make decisions for themselves, the swarm PDUs need to communicate among themselves to assess system statuses, leveraging knowledge of the cargo handling system 300 configuration to effectively share information and contribute towards system goals. Accordingly, in various embodiments, swarm PDUs do not require explicit instructions for every action. Based on their position within cargo handling system 300 and unique properties, each swarm PDU inherently understands its position and may contribute accordingly. Thus, in various embodiments, each swarm PDU autonomously determines a best action based on the received command from the operator via the operator controller 500, such as the plurality of loading/unloading area PDUs 308 turning to optimal positions for ULD translation, without the need for external control panels to instruction each of the plurality of loading/unloading area PDUs 308 exactly where to steer. This approach leads to more optimized control, as opposed to classic systems that rigidly dictate PDU steer angles throughout rotations. In that regard, in various embodiments, swarm PDUs collaborate to monitor and update their actions dynamically, ensuring a more successful and efficient ULD transformation.

In order to provide optimized control, in various embodiments, each swarm PDU is configured to detect being covered by a ULD and to share such information with other swarm PDUs in their immediate vicinity. In that regard, in various embodiments, as ULDs traverse the cargo handling system 300, and a swarm PDU becomes covered, the swarm PDU shares information with other swarm PDUs in their immediate vicinity as they become covered and uncovered, allowing the swarm PDUs to localize ULDs based on known positions of the swarm PDUs. In various embodiments, once the ULD is stored in its final position, the associated ones of the swarm PDUs maintain this information even when powered off. In that regard, in various embodiments, responsive to the cargo handling system 300 being fully loaded, powered down for flight, and then powered up for unloading, the associated swarm PDUs are aware of the last powered state and maintain knowledge of ULD positions. In various embodiments, the swarm PDU may cull which other swarm PDUs it shares information with based on the operational information provided by the operator via the operator controller 500. In that regard, with temporary reference to FIGS. 6A and 6B, responsive to PDUs 606 detecting the ULD 604, while PDUs 606 need to share information with PDUs 608 because the ULD is moving to a forward position, there may not be a need to share that information with the swarm PDUs 602 because the ULD is not headed in the aft direction.

In various embodiments, along with positions within the cargo handling system 300, the swarm PDUs may also determine a rough estimate of the ULD baseplate size. That is, in various embodiments, the swarm PDUs are aware of their own positions within the cargo system and therefore, may collaborate with other swarm PDUs to determine whether a ULD is present, and the rough size of the baseplate of the ULD may be determined. In various embodiments, by determining a rough size of the baseplate of the ULD, in the event of a command from the operator controller 500 such as rotation of the ULD, the swarm PDUs may identify which other swarm PDUs to notify in order to complete the rotation. In that regard, in various embodiments, by notifying the appropriate ones of the swarm PDUs, scrubbing of a PDU may be avoided. In various embodiments, scrubbing may occur for a number of reasons, but essentially there are two different kinds of scrubbing. One type is when a PDU is attempting to drive a ULD and the ULD is not moving at the expected pace. This signifies that there could be something blocking or restraining the ULD, such as foreign object debris or a latch, among others. A second type of scrubbing is when a ULD is being dragged across a PDU that is not driving. The PDU interprets that a ULD is moving across its position but it, the PDU, is not contributing to the movement. Therefore, the ULD is scrubbing. In various embodiments, by estimating a size of the baseplate of the ULD, the appropriate ones of the swarm PDUs may be notified in order that scrubbing is avoided. As with the position of the ULD, a size of the ULD may be maintained by associated ones of the swarm PDUs once the ULD is in its final position. In that regard, in various embodiments, responsive to the cargo handling system 300 being fully loaded, powered down for flight, and then powered up for unloading, the associated swarm PDUs are aware of the last powered state and maintain knowledge of ULD baseplate size.

In various embodiments, in times of power or electronic failure, swarm PDUs may individually become offline. Due to the swarm principles and methodology, no single PDU has all the configuration information, rather the configuration information is shared and distributed through the swarm PDUs, which reduces or prevents system wide failures if a single (or number) of swarm PDUs go offline. Responsive to an offline swarm PDU coming back online, in various embodiments, the swarm PDU may obtain configuration information and operational information, i.e. objectives, error states, or container locations, among others, from other swarm PDUs through the mesh network and may once again begin contributing to the swarm based off its unique location, which reduces a risk of single point failures and provides a certain amount of redundancy to the cargo handling system 300. In that regard, in various embodiments, the configuration information and the operational information may be obtained from one or more PDUs in the swarm PDUs because each of the swarm PDUs stores the configuration information and the operational information such that the configuration information and the operational information is not stored in any one location.

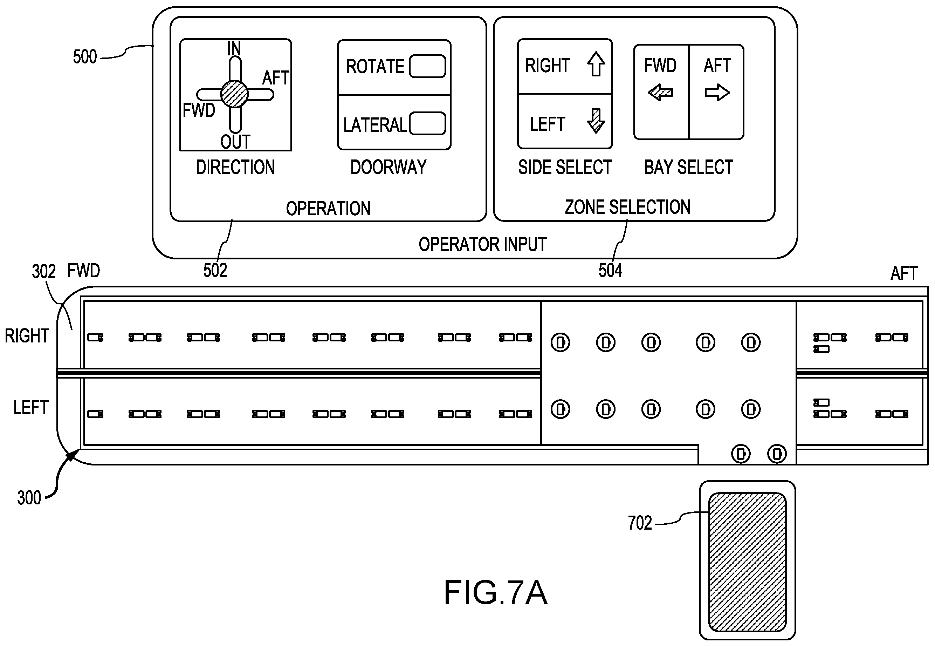

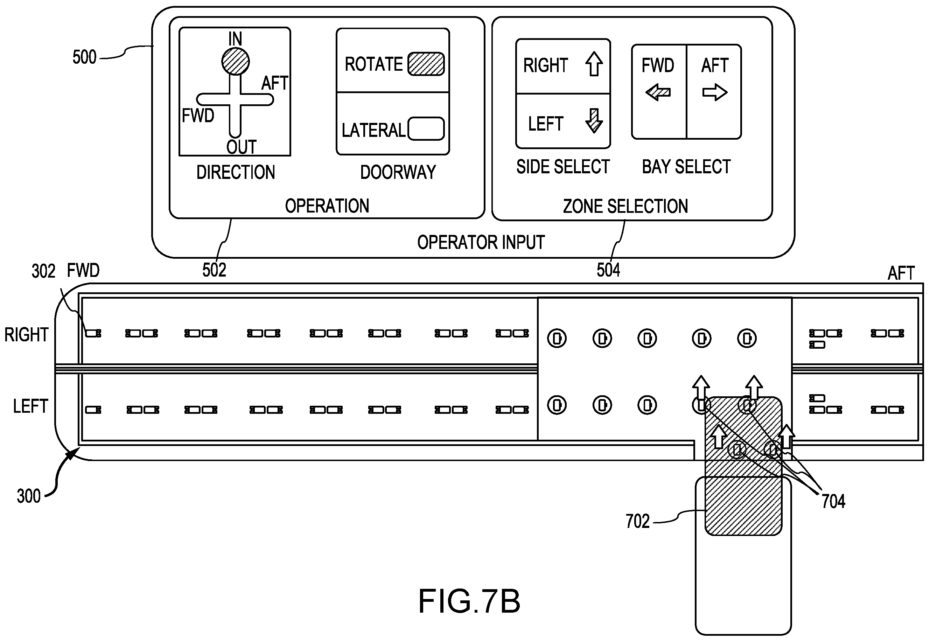

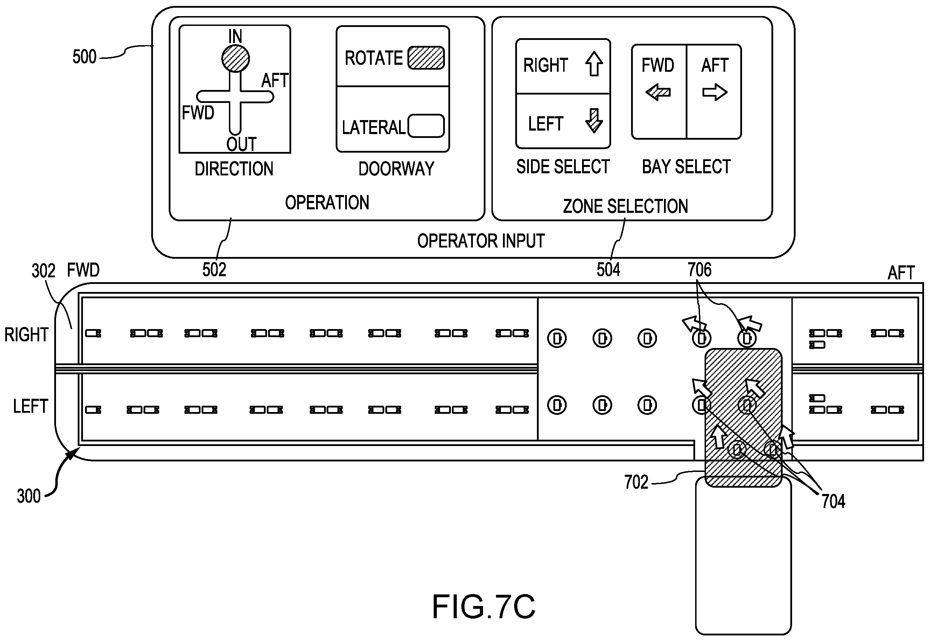

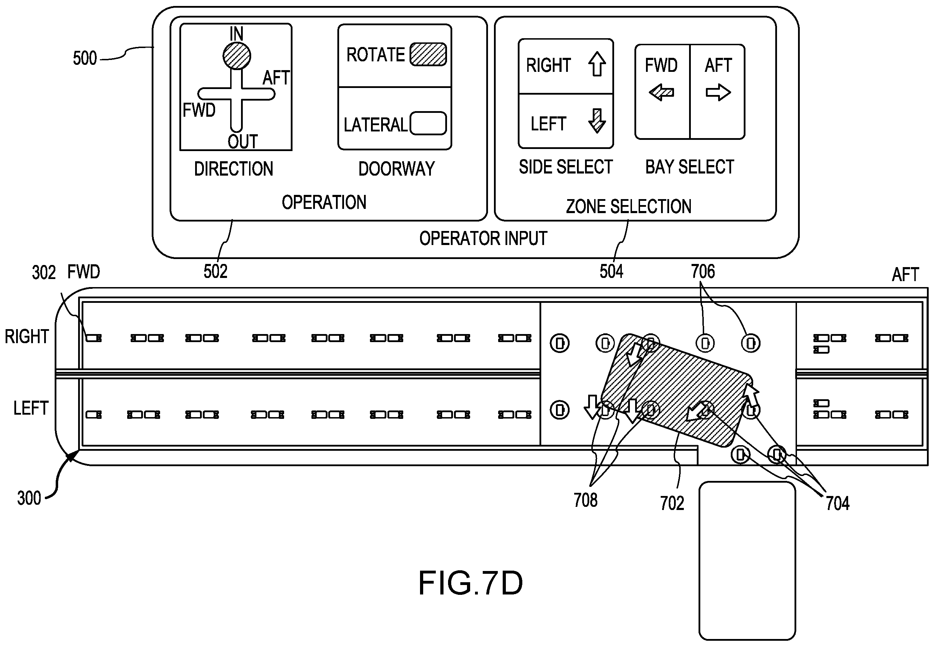

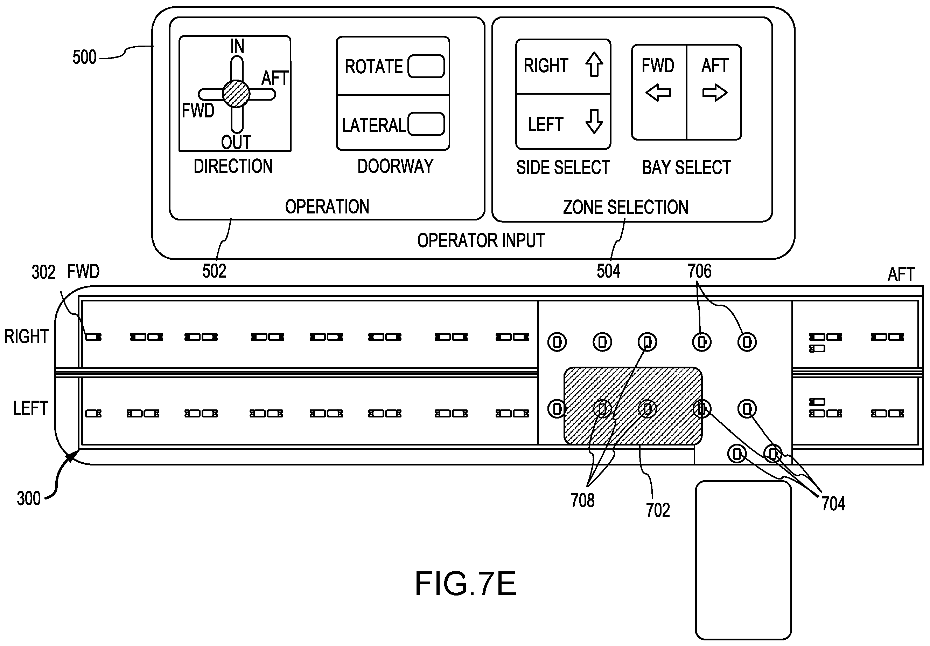

Referring now to FIGS. 7A, 7B, 7C, 7D, and 7E, a schematic view of a ULD being loaded into the cargo handling system 300 positioned on a cargo deck 302 of an aircraft using a set of swarm PDUs is illustrated, in accordance with various embodiments. In various embodiments, the operator utilizes the operator controller 500 to indicate the operation to be performed by the swarm PDUs. In various embodiments, with regard to FIG. 7A, initially, a ULD 702 is currently on a loading platform waiting to be loaded onto a cargo deck 302 of the aircraft and the operator is providing input to cargo handling system 300 via the operator controller 500 and to all of the swarm PDUs to identify a direction that the ULD 702 is to be moved, i.e. in, to identify that the ULD 702 is to be rotated, to identify that the ULD 702 is to be positioned on a left side of the aircraft, and to identify that the ULD 702 is to be positioned in the forward bay portion relative to the loading area.

With regard to FIG. 7B, responsive to the commands from the operator via the operator controller 500 and responsive to the loading platform moving the ULD 702 into the aircraft, swarm PDUs 704 are configured to detect the presence of the ULD 702. With temporary reference to FIG. 2, each of the swarm PDUs may include the ULD sensor 219 to detect the presence of the ULD 702. In various embodiments, the ULD sensor 219 may include a proximity sensor, a capacitive sensor, a capacitive displacement sensor, a Doppler effect sensor, an eddy-current sensor, a laser rangefinder sensor, a magnetic sensor, an active or passive optical sensor, an active or passive thermal sensor, a photocell sensor, a radar sensor, a sonar sensor, a lidar sensor, an ultrasonic sensor or the like. Returning to FIG. 7B, responsive to detecting the ULD 702, the swarm PDUs 704 operate to move the ULD 702 into onto the cargo deck 312.

With regard to FIG. 7C, responsive the ULD 702 moving further onto the cargo deck 312, swarm PDUs 704 are configured to notify the swarm PDUs 706 that the ULD 702 is incoming and, upon detecting the presence of the ULD 702, are configured, along with swarm PDUs 704, to begin rotating the ULD 702. With regard to FIG. 7D, responsive the ULD 702 moving further onto the cargo deck 312 and being rotated, swarm PDUs 704 and 706 are configured to notify swarm PDUs 708 that the ULD 702 is incoming and being rotated toward them and, upon detecting the presence of the ULD 702, are configured, along with swarm PDUs 704 to complete rotation of the ULD 702. It is noted that once a swarm PDU, such as swarm PDUs 706 and certain ones of swarm PDUs 704 no longer detect a presence of the ULD 702 they may return to a standby mode. With regard to FIG. 7E, once the ULD 702 has been fully rotated to a left side forward bay portion relative to the loading area, all the swarm PDUs 704, 706, and 708 may enter a standby mode to waiting for another operation from the operator via the operator controller 500.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A cargo handling system, comprising:
a plurality of power drive units (110, 210), wherein each power drive unit in the plurality of power drive units comprises:
a drive roller (208);
a motor (242) configured to rotate the drive roller; and
a controller (130), the controller is configured to:
directly communicate with at least one other power drive unit of the plurality of power drive units to drive cargo in a predetermined direction.

2. The cargo handling system of claim 1, wherein, in order to drive the cargo in the predetermined direction, the controller (130) is configured to send a command to engage the drive roller (208) of at least one of the power drive unit (210) or the at least one other power drive unit.

3. The cargo handling system of claim 1 or 2, wherein the at least one other power drive unit is a power drive unit adjacent to the power drive unit.

4. The cargo handling system of any preceding claim, wherein, by each power drive unit of the plurality of power drive units communicating with the at least one other power drive unit of the plurality of power drive units, a mesh network of communication is formed by of the plurality of power drive units.

5. The cargo handling system of any preceding claim, wherein the predetermined direction is provided from an operator via an operator controller.

6. The cargo handling system of any preceding claim, each of the plurality of power drive units further comprises:
a presence sensor (219), wherein the controller is further configured to send a command to engage the drive roller of in response to receiving a signal from the presence sensor indicating a presence of the cargo.

7. The cargo handling system of any preceding claim, wherein a size of the cargo may be determined by the plurality of power drive units based on at least two power drive units of the plurality of power drive units providing signals from respective presence sensors indicating a presence of the cargo.

8. The cargo handling system of any preceding claim, wherein, responsive to at least one power drive unit of the plurality of power drive units experiencing an event such that the at least one power drive unit becomes non-operational and responsive to the at least one power drive unit recovering from the event, the controller is configured to:
establish communication with at the least one other power drive unit of the plurality of power drive units;
request configuration information from the at least one other power drive unit; and
responsive to receiving the configuration information, rejoin the plurality of power drive units as part of a mesh network.

9. An aircraft, the aircraft comprising:
cargo handling system as claimed in any preceding claim.

10. A method for a plurality of power drive units to drive cargo, the method comprising:
establishing, by a controller in a first power drive unit of the plurality of power drive units, communications with at least one other controller in at least one other power drive unit in the plurality of power drive units; and
responsive to receiving a first command to drive the cargo in a first direction, communicating, by the controller in the first power drive unit, with the at least one other controller in the at least one other power drive unit in order that both the first power drive unit and the at least one other power drive unit drive the cargo in the first direction.

11. The method of claim 10, wherein, in order to drive the cargo in the first direction, the controller is configured to send a second command to engage a drive roller of the first power drive unit.

12. The method of claim 11, wherein the controller is configured to send the second command to engage the drive roller of the first power drive unit in response to receiving a signal from a presence sensor indicating a presence of the cargo.

13. The method of claim 11 or 12, wherein the at least one other power drive unit is a power drive unit adjacent to the power drive unit.
